# EUROPEAN PATENT SPECIFICATION

(11) **EP 4 197 510 B1**
(45) Date of publication and mention of the grant of the patent: **13.08.2025**
(21) Application number: 21306828.1
(22) Date of filing: 17.12.2021
(51) Int. Cl.: A61G 3/06, B60P 1/44, B61D 23/02

(54) **LIFTING APPARATUS FOR ASSISTING WHEELCHAIR USERS TO GET ON/OFF A PUBLIC TRANSPORTATION VEHICLE, AND RELATED PUBLIC TRANSPORTATION VEHICLE**
HEBEVORRICHTUNG ZUM UNTERSTÜTZEN VON ROLLSTUHLFAHRERN BEIM EINSTEIGEN IN EIN ÖFFENTLICHES VERKEHRSMITTEL UND BEIM AUSSTEIGEN UND ZUGEHÖRIGES ÖFFENTLICHES VERKEHRSMITTEL
APPAREIL DE LEVAGE POUR AIDER LES PERSONNES EN FAUTEUIL ROULANT À MONTER/DESCENDRE D'UN VÉHICULE DE TRANSPORT EN COMMUN, ET VÉHICULE DE TRANSPORT EN COMMUN ASSOCIÉ

(43) Date of publication of application: 21.06.2023
(73) Proprietor: ALSTOM Holdings, 93400 Saint-Ouen-sur-Seine (FR)
(72) Inventor: BOTTERO, Federico, 12038 Savigliano (IT)
(74) Representative: Plasseraud IP

(56) References cited:
- US-A- 5 975 830

## Description

The present invention relates to a lifting apparatus for assisting wheelchair users to get on or off a public transportation vehicle, and to a related public transportation vehicle, in particular a railway vehicle, such as a train.

The present invention is particularly suitable for being used in railway cars and will be described hereinafter by making particular reference to such application without intending in any way to limit its possible use with other types of public transportation vehicles, such as for example buses.

In the field of transportations, it is known the use of devices aimed at aiding wheelchair users to get on or off a public transportation vehicle, such as a train or a bus, when there is a difference in height between the level of the access floor of the vehicle and the level of platform at the boarding location.

Although known solutions currently adopted allow, in a rather satisfying way, to meet this aim, they still present some drawbacks and technical inconvenient.

For example, in some cases known lifting apparatuses require that train wagons are provided with rather wide entrance doors, e.g. wider than 950 mm.

Further, in some other cases the lifting apparatuses used are rather bulky and, once installed, they occupy a significant space.

As a consequence, these known solutions entail for example either to adopt a specific door or at least to introduce some constructional modifications; in some applications, it is even necessary to dedicate an entrance only to wheelchair users.

In addition, due to non-uniformity of the heights of boarding locations, the difference in height between the level of the various stop or station platforms and that of the entry floor of the vehicle can vary significantly.

Indeed, for example railway station platforms can have a height varying from 250 mm up to 760 mm; as a consequence, some lifting apparatuses installed on board of a vehicle may not be in condition to fill always the existing gap and thus they cannot assist properly wheelchair users to get on or get off a transport vehicle.

US 5975830 A discloses an under floor lift comprising a U-shaped header framework which is mountable between a vehicle axle and floor, and which reciprocatingly receives a nestable carriage comprising a second U-shaped framework. The carriage comprises a transverse motor mount plate and a pair of horizontal arms between which is received the lift platform. The platform is pivotably suspended, lifted and lowered by spaced pairs of parallelogram linkages pivotably secured at their outboard ends to the outboard end of the carriage side rails and at their inboard ends to the inboard end of the lift platform. The carriage is telescoped by a gear and chain mechanism from an inboard stowed position horizontally out to a transfer level deployed position. The wheelchair lift is moved by a hydraulic/chain drive downwardly and upwardly supported by the parallelogram arms to or from a ground level position, to permit the lift to be an in-swing, negative type lift. An automatically transitioning inboard bridge plate is pivoted to the platform, and during descent inclines and forms an inboard barrier. The bridge plate is slidably mounted on channels or rails which are mounted on a support plate pivotably mounted to the outboard edge of the carriage motor mount plate.

It is a main aim of the present invention to provide an innovative lifting apparatus capable of mitigating, at least partially, one or more of the previously mentioned drawbacks and technical inconvenient.

In particular, within this aim, an object of the present invention is to provide a lifting apparatus that, with respect to known solutions, is capable of more easily filling any gap between any type of existing stop or station platforms and the entry level of a vehicle on which it is installed.

A further object of the present invention is to provide a lifting apparatus that, with respect to known solutions, can be installed without requiring the adoption of dedicated doors or of substantial constructional modifications, and which can be used even with very narrow doors, e.g. with doors having a width of 800 mm.

Yet a further object of the present invention is to provide a lifting apparatus that is more compact with respect to known solutions, which is highly reliable, easy to realize and at competitive costs.

This aim, these objects and others which will become apparent hereinafter are achieved by a lifting apparatus according to claim 1.

According to some embodiments, the lifting apparatus according to the present invention may comprise one or more of the following features, which may be combined in any technical feasible and even partial combination:
- the movable assembly is arranged to be rotated, relative to said fixing support, about said vertical axis, from said rest position into an intermediate position where said ramp is brought at the entry threshold of said entrance of the vehicle;
- the movable assembly is arranged to be further rotated, relative to said fixing support, about an axis transversal to said vertical axis, from said intermediate position into said working position up to when said first end side of said ramp is brought to bear on the station platform;
- the actuating means are configured to adjust the inclination of the lifting platform relative to said ramp;
- the actuating means comprise a slide which is mounted sliding on said ramp with the lifting platform having one side which is connected to the slide pivotally around a first pivoting axis;
- the ramp comprises two substantially parallel rails which extend from said first end side to said second opposite end side, and a central bush bearing which extends from said first end side to said second opposite end side, and wherein said actuating means further comprise a first worm screw which is housed movable inside the central bush bearing, said first worm screw being arranged, once actuated to move, to cause said slide to slide along said two parallel rails;
- the actuating means further comprise a connecting arm which is configured to connect the lifting platform to said slide in a movable manner between a folded position where the lifting platform overlaps said ramp with said slide and the connecting arm positioned in between, and an extracted position where the lifting platform is deployed relative to said ramp to be brought into a wheelchair carrying position;
- the connecting arm has a variable extension along an axis transversal to said vertical axis and said first pivoting axis;
- the connecting arm comprises: a fork shaped part which is connected, at the ends of its tines, to the slide pivotally around a second pivot axis substantially parallel to said first pivot axis; and a U- or C-shaped part which is arranged with its side arms oriented opposite to said tines and is adapted to be connected to said lifting platform, said U- or C-shaped part being movable relative to the fork shaped part;
- the connecting arm comprises a bushing which is connected at a first side to said U- or C-shaped part and has a second opposite side that is inserted sliding inside a first through hole provided on a central portion of the fork-shaped part, and two guiding rods which are solidly connected at one end to the U- or C-shaped part and extend, substantially parallel to each other, along two opposite sides with the bushing positioned in between, the two guiding rods having each a free end which is inserted sliding inside a corresponding through holes provided on said central portion of the fork-shaped part;
- the actuating means further comprises a reduction gear mechanism connected to the U- or C-shaped part, and a second worm screw which is keyed on the reduction gear mechanism, said second worm screw being movable inside and operatively coupled to the fork shaped part via said bushing;
- the actuating means further comprises a threaded insert which is coupled to the second worm screw and is adapted to rest on the central portion of the fork-shaped part;
- the lifting platform comprises a base and at least one visual indicator for indicating when the base has reached a substantially horizontal position.

This aim, these objects and others which will become apparent hereinafter are also achieved by a public transportation vehicle, in particular a railway vehicle, characterized in that it comprises a lifting apparatus as above indicated, and in particular as described hereinafter and defined in the appended relevant claims.

Further characteristics and advantages will become apparent from the description of some preferred but not exclusive exemplary embodiments of a lifting apparatus and a public transportation vehicle according to the present invention, illustrated only by way of non-limitative examples with the accompanying drawings, wherein:
figure 1 is a perspective view illustrating a lifting apparatus according to the invention;
figures 2-4 are views illustrating in more details some components of the lifting apparatus of figure 1;
figure 5 is a side view illustrating the lifting apparatus of figure 1 in a rest position;
figures 6 to 12 are views showing in sequence the lifting apparatus according to the invention while assisting a wheelchair user to get on board of a railway car.

It should be noted that in the detailed description that follows, identical or similar components, either from a structural and/or functional point of view, have the same reference numerals, regardless of whether they are shown in different embodiments of the present disclosure; it should also be noted that in order to clearly and concisely describe the present disclosure, the drawings may not necessarily be to scale and certain features of the disclosure may be shown in somewhat schematic form.

Further, when the term "adapted", or "arranged", or "configured", or "shaped", or a similar term is used herein while referring to any component as a whole, or to any part of a component, or to a combination of components, it has to be understood that it means and encompasses correspondingly either the structure, and/or configuration and/or form and/or positioning of the related component or part thereof, or the combination such term refers to.

In addition, when the term "substantial" or "substantially" is used herein, it has to be understood as encompassing an actual variation of plus or minus 5% with respect to an indicated reference axis or position, and when the terms transversal or transversally are hereby used, they have to be understood as encompassing a direction non-parallel to the reference part(s) or direction(s)/axis they refer to, and perpendicularity has to be considered a specific case of transverse direction.

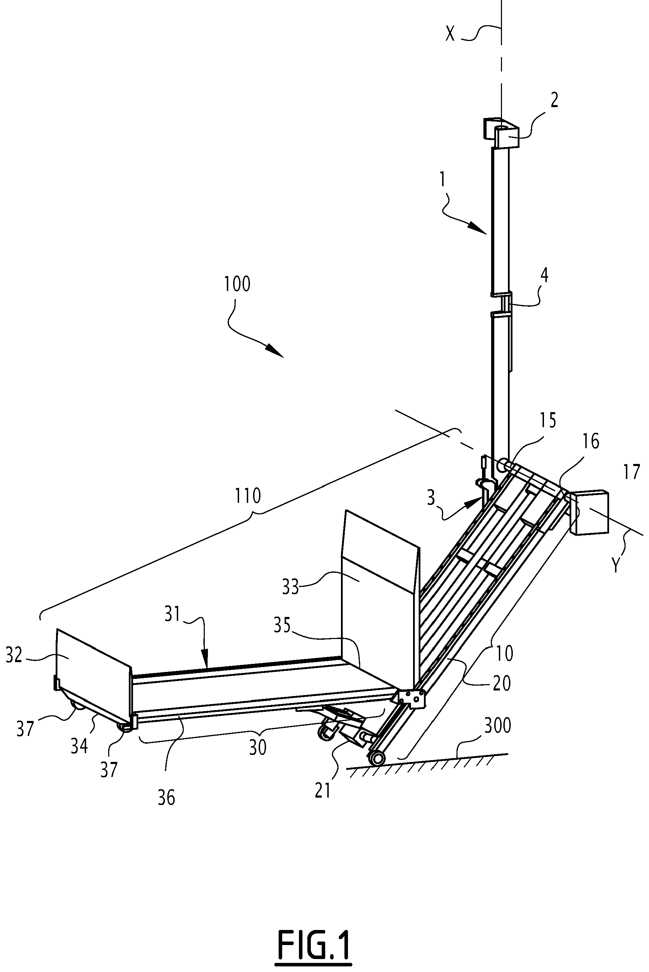

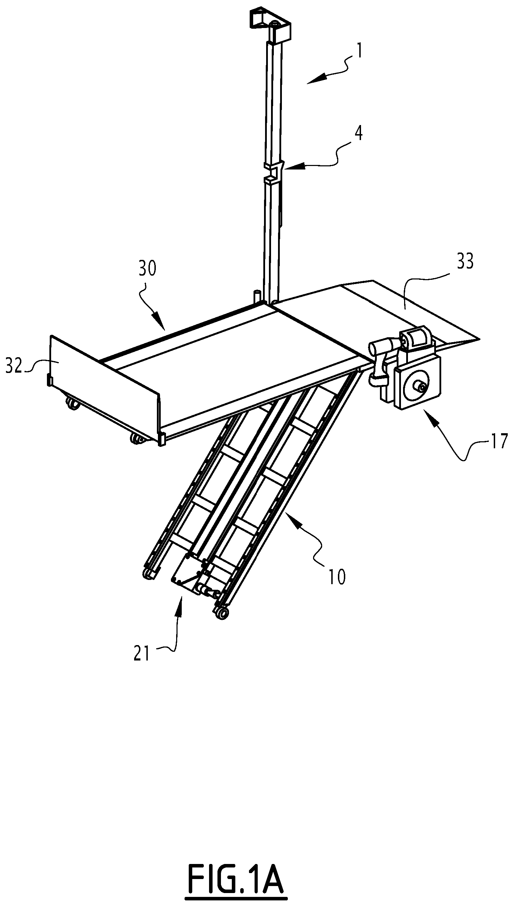

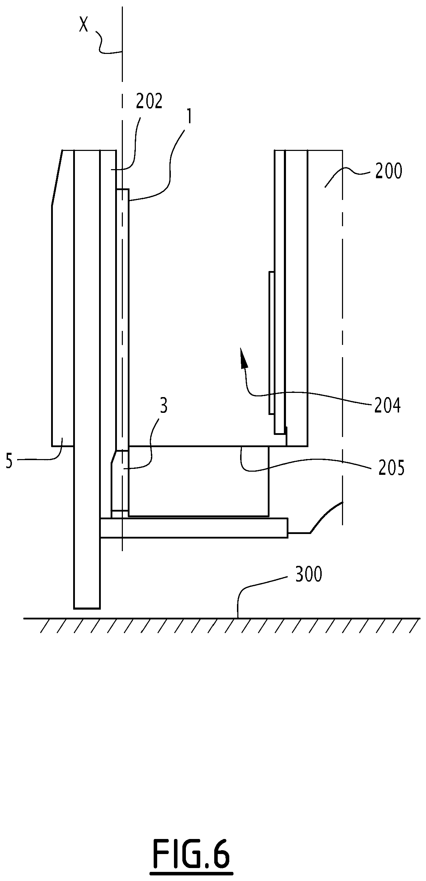

Figures 1 and 1A illustrate a lifting apparatus according to the invention, indicated by the overall reference number 100 which is suitable to be installed on a public transportation vehicle, an exemplary part of which, namely a part of a railway car, is schematically indicated in figures 6 to 12 by the reference number 200.

The lifting apparatus 100 comprises a fixing support 1 which is adapted to connect the apparatus 100 to the structure of a vehicle, e.g. the body shell of the railway car 200.

In the exemplary embodiment illustrated in the figures, the fixing support 1 has the form of a pole extending along a substantially vertical axis X.

Usefully, as visible in figures 6 to 12, the pole 1 is adapted to be fixed, for example at its two opposite ends 2 and 3, inside the vestibule area of the railway car 200, and is positioned on a side, e.g. a left side 202 with respect to the entrance 204 of the car 200, for instance in correspondence of the gangway side of the car 200.

In the figures 6 to 12 the door at the entrance 204 has been removed for the sake of clarity of illustration.

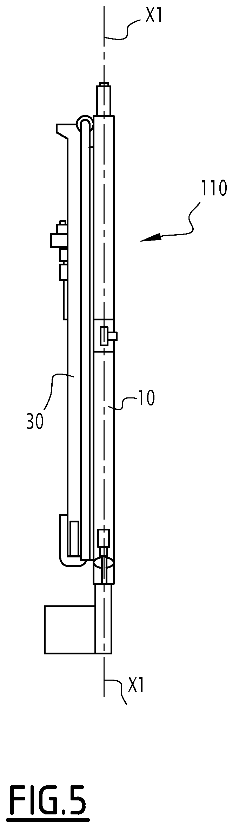

The lifting apparatus 100 according to the invention further comprises a movable assembly, indicated in figures 1 and 5 by the overall reference number 110, which is connected to the fixing support 1 in a movable way relative to it.

In particular, and as it will result in more details hereinafter, the whole movable assembly 110 is movable relative to the fixing support 1 at least between a rest position where it is secured in position to the fixing support 1, and a working position where it is displaced relative to the fixing support 1 in order to allow a wheelchair user to get on or off the railway car 200.

According to a possible embodiment, the movable assembly 110 comprises a ramp 10 which is adapted to bridge the gap, namely the difference of height between the level of a station platform 300 and the level of the access floor 205 at the entrance 204 of the car 200.

In particular, the ramp 10 is adapted to be positioned, when the movably assembly 110 is in said working position, in an inclined position with a first end side 12 adapted to bear on a station platform 300 and a second opposite end side 14 positioned substantially at the level of the access floor 205 at said entrance 204.

The movable assembly 110 further comprises:
- a lifting platform 30 suitable to carry a wheelchair user between the station platform 300 and the level of the access floor 205 at said entrance 204 in order to allow such user to get on or off the railway car 200; and
- actuating means, indicated by the cumulative reference number 50, which are configured to interconnect structurally and in a movable manner the lifting platform 30 to the ramp 10.

More in details, as visible for example in figure 6, in the rest position the whole movable assembly 110 is placed, together with the fixing support 1, inside the car 200 and is arranged to be substantially aligned with the fixing support 1 along said first side 202 relative to the entrance 204; in this position, as for example illustrated in figure 5, the ramp 10 lies in a plane X1 substantially parallel to the vertical axis X and the lifting platform 30 overlaps the ramp 10 (and hence also the lifting platform 30 lies in a plane substantially parallel to the vertical axis X) while at least part of the actuating means 50 are interposed there between.

Hence, in this position, the components of the movable assembly 110 are folded among them to assume a compact configuration and extend in a substantially vertical direction, lying in one or more vertical panes substantially parallel to the axis X.

Thus, in the rest position the movable assembly 110 in practice is configured to form or look like a part of the wall or of an interior surface of the car 200 and, as a whole, is aligned with the fixing support 1 along the left side 202 in a direction substantially parallel to the direction of passage of passengers.

In this way, as visible in figure 6, the lifting apparatus 100 does not hinder at all the entrance 204.

Usefully, in one possible embodiment, the movable assembly 110 is arranged to be rotated, relative to the fixing support 1, about said vertical axis X, from the rest position into an intermediate position where the ramp 10 is brought at the threshold of the entrance 204 of the vehicle 200.

In addition, the movable assembly 110 is further arranged to be further rotated, relative to the fixing support 1, about an axis Y transversal, and in particular perpendicular to the vertical X, from the intermediate position into said working position until the first end side 12 of the ramp 10 is brought to bear on the station platform 300.

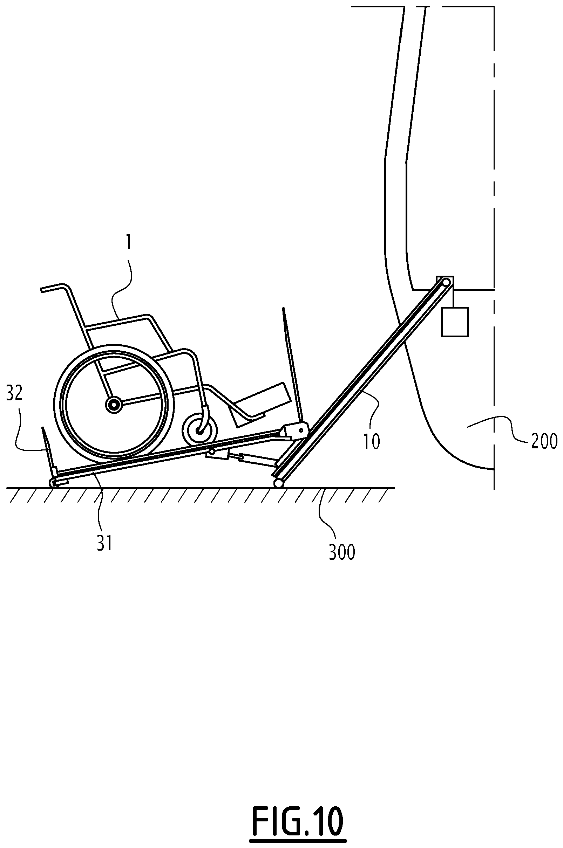

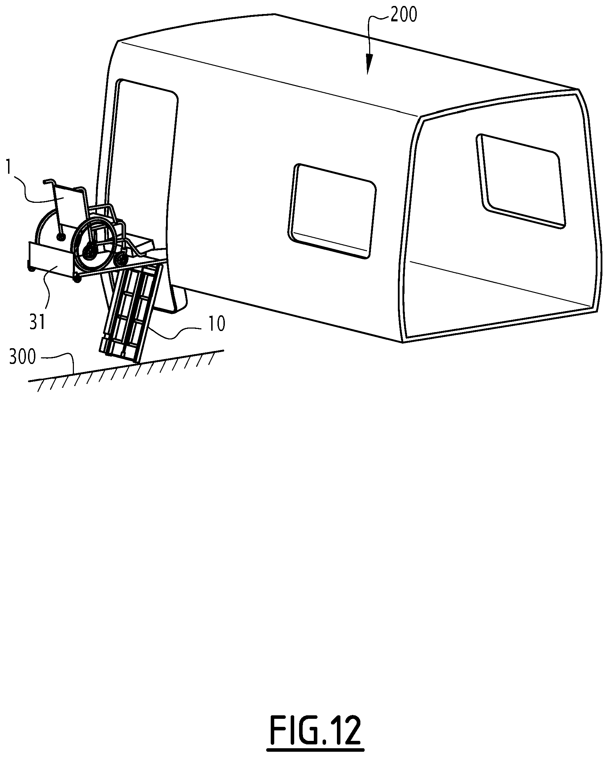

In particular, as it will described in more details hereinafter, the actuating means 50 are conveniently configured to displace the lifting platform 30 along the ramp 10 between a lowered position where the lifting platform 30 is brought at the level of a station platform 300, as for example visible in figure 10, and a raised position where the lifting platform 30 is brought at the level of the access floor 205 of the entrance 204 of the car 200, as for example illustrated in figure 12.

Usefully, the actuating means 50 are configured to allow also adjusting the position, and in particular the inclination of the lifting platform 30 relative to the level of a station platform 300 and/or to the ramp 10 itself.

According to the exemplary embodiment illustrated in figure 1, the ramp 10 comprises a frame 11 having a base 20, the above mentioned first end side 12 which is provided with wheels 13 adapted to bear on the station platform 300 when the movable assembly 110 is in the working position.

Further, the frame 11 comprises the above mentioned second end 14, opposite to the first end 12, which is adapted to be positioned substantially at the level of the access floor 205 of the entrance 204 of the car 200 when the movable assembly 110 is in the working position.

In particular, the second end 14, which has for example the form of a rod, is pivotally connected at one end 15 to the fixing pole 1, e.g. close to the lower end 3 thereof, and at an opposite end 16 to actuation means 17.

The end 16 is a spline shaft that has two stable positions (retracted and extended) and can be manually inserted into the actuator 17.

The actuation means 17, which can comprise for example an electric motor fed for instance by the power system on board of the railway car 200 and/or by a rechargeable battery, cause the ramp 10 (together with the lifting platform 30 and the actuating means 50 connected therewith) to rotate around the axis Y with respect to the fixing pole 1, until bringing the wheels 13 to roll on the station platform until the ramp 10 assumes its final inclined position, as shown for example in figures 1 and 6-12.

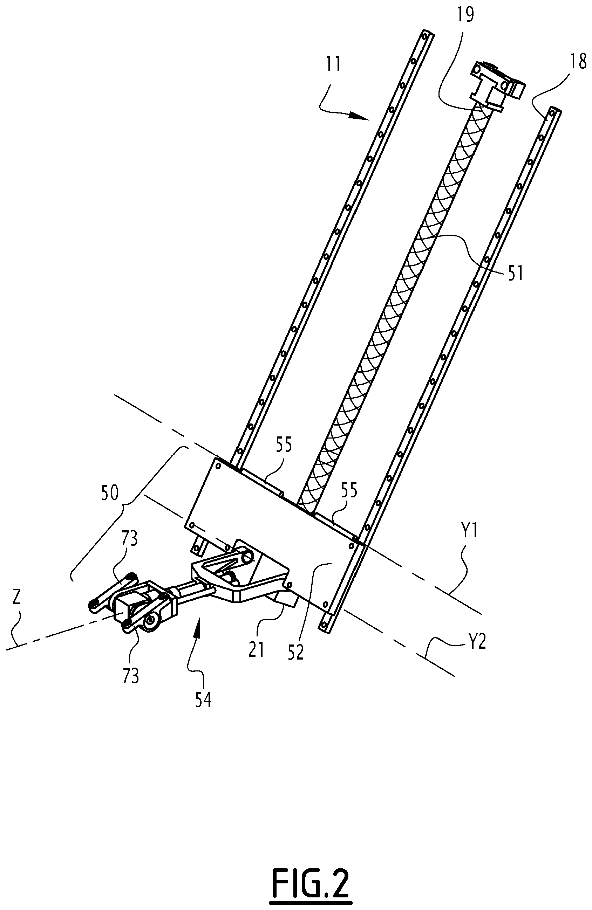

Further, as illustrated in figure 2, the frame 11 comprises two parallel rails 18 which run from the first end 12 to the second end 14, and a central bush bearing 19 inside which there is placed a first worm screw, schematically represented in figure 1 by a dotted line 51, which is part of the actuating means 50.

In particular, at the first end 12 of the frame 10 there is provided a connection 21 at which an end of the worm screw 51 can be operatively connected to and moved by an actuator; such actuator can be inserted in the connection 21 from a lateral side, e.g. in a direction parallel to the axis Y.

The actuator can be for example any suitable tool, e.g. a battery operated drill, used directly by a user who is supervising or operating the lifting assembly 100; alternatively, it can be constituted for instance by a motor whose shaft is inserted in the connection 21 and operatively connected to the first worm screw 51, and the motor can be electrically fed as well by the power system on board of the railway car 200 and/or by a rechargeable battery.

The lifting platform 30 comprises a base 31 suitable to accommodate a wheelchair 1, as illustrated for example in figures 10-12 where a user of the wheelchair 1 has been omitted for the sake of clarity of illustration, a front barrier 32, a back barrier 33, and wheels 37 adapted to roll on the platform 300.

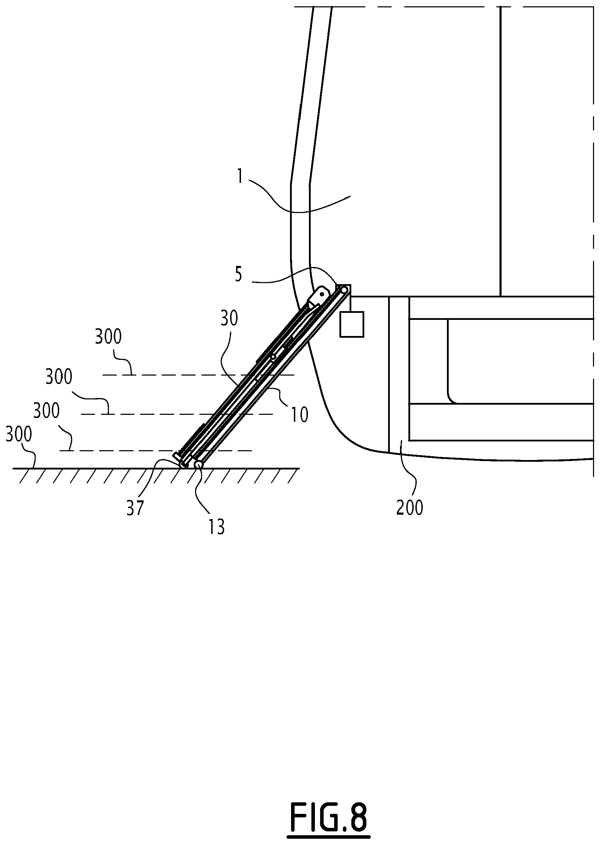

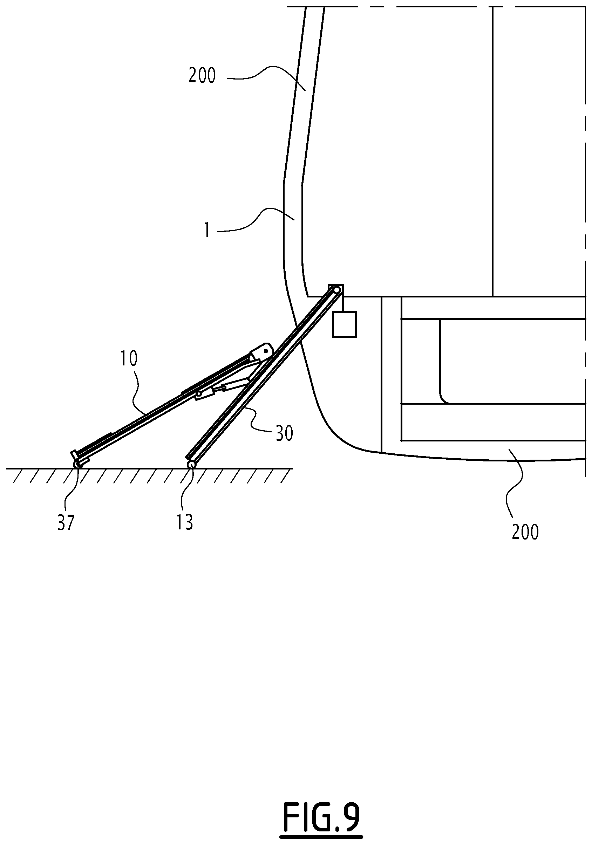

The front barrier 32 is connected at a front end side 34 of the base 31 and can be moved, for example manually by an operator among a first outer position (represented in figure 10 by a dotted line) where it forms a small ramp for the wheelchair user to move from the station platform 300 onto the base 31 or vice versa, a second raised position (illustrated for example in figures 10-12) where it extends substantially vertically from the base 31 and constitutes an anti-fall or stopping safety barrier for the wheelchair 1, and a third rest position where it is folded over and overlaps onto the base 31, as for example illustrated in figures 8 and 9 (and as it is also the case when the movable assembly 100 is in the positions illustrated in figures 5-7).

Likewise, the back barrier 33 is connected at an opposite back side 35 of the base 31 and can be moved, for example manually by an operator among a first outer position (represented in figure 12) where it forms a small ramp for the wheelchair user to move from the base 31 onto the access floor of the car 200 or vice versa, a second raised position (illustrated for example in figures 10-12) where it extends substantially vertically from the base 31 and constitutes an anti-fall or stopping safety barrier for the wheelchair 1, and a third rest position where it is folded over and overlaps onto the base 31, as for example illustrated in figures 8 and 9 (and as it is also the case when the movable assembly 100 is in the positions illustrated in figures 5-7).

Usefully, the lifting platform 30 is provided with means adapted for indicating its inclination, and in particular to visually indicate to an operator when the base 31 is in a substantially horizontal position.

Such indication means can comprise for example one or more bubble levels or any other suitable optical indicator, schematically indicated by the reference number 36 in figure 1.

In the lifting apparatus 100 according to the invention, the actuating means 50 further comprise a slide 52 which is slidably mounted along the two rails 18 and is operatively coupled to and moved by the first worm screw 51 when this latter is actuated by the actuator coupled to the connection 21.

Further the slide 52 has two anchoring points 55 where the lifting platform 30, and in particular the opposite back side 35 of its base 31 is connected pivotally with respect to a pivoting axis, indicated in figure 2 by the reference Y1.

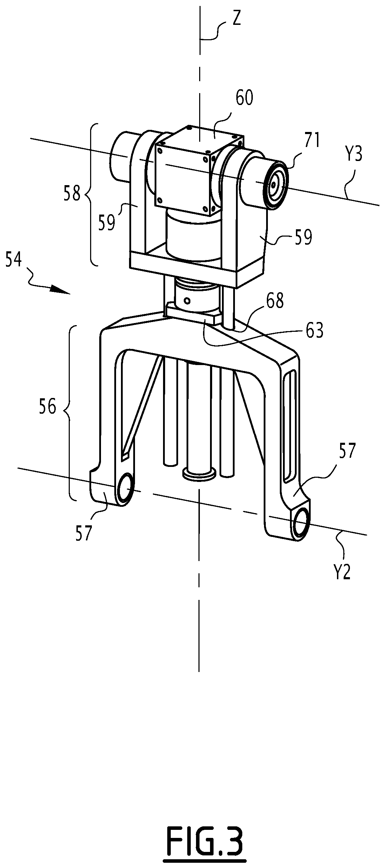

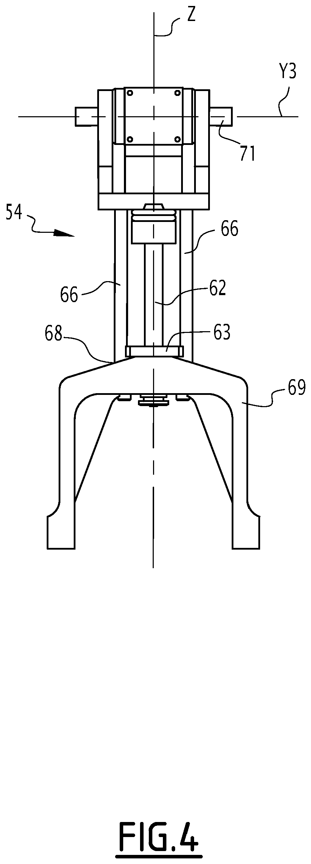

The actuating means 50 comprises a connecting arm 54, illustrated in more details in the figures 3 and 4, which interconnects mechanically, and in a movable manner, the slide 52 with the lifting platform 30.

Usefully, the connecting arm 54 is configured to connect the lifting platform 30 to the slide 52 and thus to the ramp 10, movable between a folded position where the lifting platform 30 overlaps the ramp 10 with the slide 52 and the connecting arm 54 itself positioned in between, and an unfolded position where the lifting platform 30 is deployed relative to ramp 10 in order to be brought into a wheelchair carrying position.

Conveniently, the connecting arm 54 is configured to have a variable extension along an axis Z transversal to the vertical axis X and the first pivoting axis Y1 as well.

In particular, as better illustrated in figures 3 and 4, the connecting arm 54 comprises:
- a fork shaped part 56 with the ends of its two arms or tines 57 which are pivotally connected to the slide 52 in order to allow the connection arm 54 to rotate relative to the slide 52 around a pivot axis Y2;
- a second part 58, which is for example U- or C-shaped with its side arms 59 oriented opposite to the tines 57, and is adapted to be connected to the lifting platform (30), the U- or C-shaped part 58 being movable relative to the fork shaped part 56.

Inside the space defined by the two side arms 59 there is provided a reduction gear mechanism 60, of a form known per se or readily available to those skilled in the art and therefore not described herein in details.

A second worm screw, represented in figure 4 by the dotted line 62 is keyed on the reduction gear mechanism 60.

A threaded insert 63 is coupled the second worm screw 62 and is adapted to rest on a central portion 70 of the fork-shaped part 56.

The second worm screw 62 is also operatively connected to the fork shaped part 56 via a hot wiped bushing 64; such bushing 64 houses inside, at least partially, the second worm screw 62 which can slide freely therein.

In particular, the bushing 64 is connected at a first side to the U- or C-shaped part 58 and has a second opposite side that is inserted sliding inside a first through hole 69 provided on the central portion 70 of the fork-shaped part 56.

Two guiding rods 66 are solidly connected at one end to the U- or C-shaped part 58 and extend, substantially parallel to each other, along two opposite sides with the bushing 64 positioned in between.

The two guiding rods 66 have each a free end which is inserted sliding inside a corresponding through holes 68 provided on the central portion 70 of the fork-shaped part 56.

A connection 71, e.g. in the form of a rod, extends transversally along an axis Y3 from both the two side arms 59 and is adapted for connecting an actuator suitable for actuating the second worm screw 62 and thereby cause the U- or C-shaped part 58 to slide relative to the fork shaped part 56.

The actuator can be any suitable tool, for instance the same tool used for actuating the first worm screw 51, e.g. a battery operated drill used directly by a user; alternatively, it can be constituted for instance by a motor whose shaft is coupled to the connection 71 and that can be electrically fed as well by the power system on board of the railway car 200 and/or by a rechargeable battery.

As illustrated in figure 2, two supports 73 are mounted each to an external side of a corresponding side arm 59; the two supports 73 are configured to be fixed to the bottom surface of the base 31 of the lifting platform 30.

The operative functioning of the lifting apparatus 100 according to the invention will be now described with reference to figures 6-12 showing in sequence the various phases needed for assisting a wheelchair user to get on board of the railway car 200.

In particular, when the lifting apparatus 100 is not is use, as previously described, the movable assembly 110 is in the rest position where it is secured to the fixing support 1; to this end, the fixing support 1 is for example provided with a latching mechanism 4 to which the ramp 10 is latched.

In this position, the lifting platform 30 is in the folded position where it overlaps the ramp 10 with the slide 52 and the connecting arm 54 positioned in between, assuming a very compact configuration as shown in figure 5.

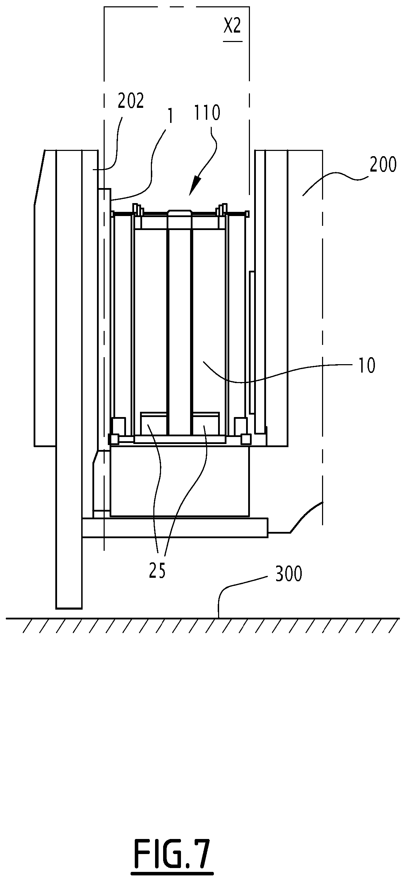

In the folded position, the lifting platform 30 (together with the connecting rod 54 and the slide 52) can be locked onto the ramp 10 via any suitable locking means, as those schematically represented in figure 7 by the reference number 25.

In this way, as illustrated in figure 6, with respect to a front view of the entrance 204, the whole movable assembly 110 is placed, together with the fixing support 1 along the left side 202 with its components not hindering the free passage through the entrance 204.

Then, when the lifting apparatus 100 has to be used, an operator acting for example on the locking/unlocking lever 5 can unlock the ramp 10 from the latching mechanism 4 of the fixing support 1.

Thereafter, the operator can for example manually rotate the whole assembly 110, around the axis X of about 90° with respect to the fixing support 1; in this way, the movable assembly 110 is moved from the rest position into the intermediate position, where, as a whole, it is placed at the entrance threshold of the access floor 205 of the car 200, with its components, and in particular the ramp 10 and the lifting platform 30, still extending along a substantially vertical plane X2 parallel to the axis X, as illustrated in figure 7.

In this position, the operator, via the actuator 17, can actuate the ramp 10 to rotate, together with the lifting platform 30 and the actuating means 50 interposed there between, around the axis Y.

In this way, the wheels 13 are brought to roll on the station platform 300 until the ramp 10 assume its final inclined position bridging the difference of height between the level of the access floor 205 at the entrance 204 and the level of the station platform 300 itself, as for example illustrated in figure 9; depending on the difference between the level of the access floor and that of the station platform 300, the ramp 10 can assume a configuration more or less inclined but in any case it is capable of self-adapting its inclined position thanks to the wheels 13 rolling on the platform.

Once in this position, it is possible to actuate the first worm screw 51 and thus slides down, via the slide 52, the lifting platform 30 which is brought towards the station platform 300 (see figure 9); then, after positioning the front barrier 32 in the first outer position (shown in dotted line in figure 10, the wheelchair user can be accommodated on the base 31.

During the descent, the second worm screw 62 can freely slide inside the bushing 64.

Then, with the two anti-fall barriers 32 and 33 raised and the wheelchair 1 positioned on the base 31, the second worm screw 62 can be actuated via an actuator connected to the connection 71.

In this way, the second worm screw 62 causes the threaded insert 63 to push against the fork-shaped part 56 with the two guiding rods 66 which guide the movement of the part 58 along the axis Z relative to the fork-shaped part 56.

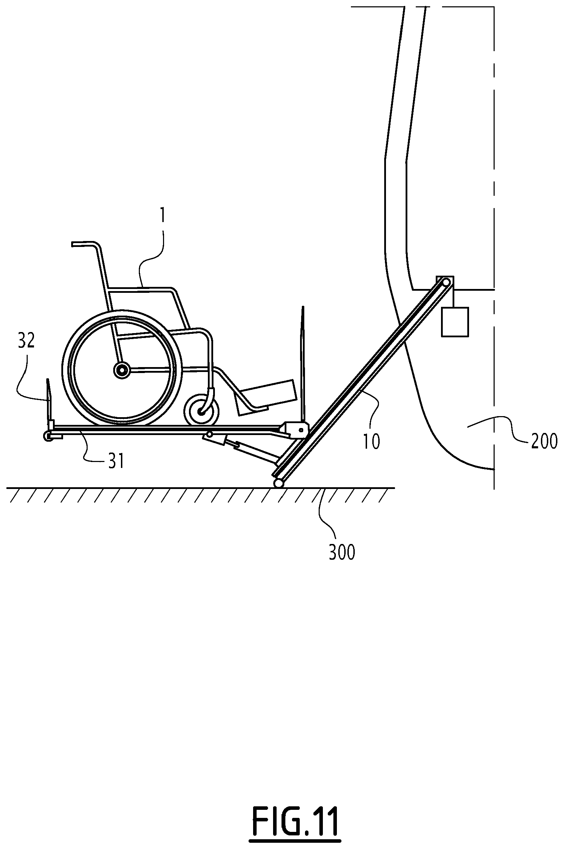

During this movement, the connecting arm 54 passes from the configuration shown in figure 3 to that shown in figure 4 and correspondingly, the lifting platform 30, by rotating around the pivot axis Y1, is brought from the inclined position shown in figure 10 to the substantially horizontal position shown in figure 11.

In particular, the visual indicator 36 can indicate to the operator that the lifting platform 30, and in particular its base 31, has reached the correct horizontal inclination, thus indicating to stop the actuation of the second worm screw 62 thus leaving the lifting platform 30 mechanically locked in the achieved horizontal position.

Then, the first worm screw 51 can be actuated again and, via the slide 52, the lifting platform 30 is raised up to the level 205 of the entrance 204, as illustrated in figure 12.

There, the back barrier 33 can be lowered and the wheelchair user can enter the car 200, as illustrated in figure 1A.

After, the operator can fold both the barriers 32 and 33 bringing them to overlap the base 31, the second worm screw 62 can be actuated to bring the lifting platform 30 to overlap the ramp 10 with the slide 52 and the connecting arm 54 positioned in between; via the actuator 17, the ramp 10 can be counter-rotated around the axis Y to bring the whole movable assembly 110 in the substantially vertical position illustrated in figure 7, where for example the lifting platform 30 (as well as the slide 52 and the connecting rod 54) can be latched to the ramp 10 via the latching means 25.

Then, the whole movable assembly 110 can be rotated with respect to the fixing support 1 around the axis X, bringing it in the rest position illustrated in figure 1, where it can be mechanically latched to the fixing support 1 via the latching mechanism 4.

Hence, it is evident from the foregoing description that the lifting apparatus 100 according to the present invention allows achieving the intended aim and objects since it has a structure which allows to easily fill the gap between the entry level of the vehicle on which it is installed and station platforms of different heights.

Indeed, as for example illustrated in figure 8 where platforms of different heights of 300 have been represented by dotted lines indicated also with the same reference number 300, the ramp 10 can assume any suitable inclination in order to bridge for example a vertical gap from 100mm up to 1200 mm and is usable even with station platforms having a height of 250 mm.

Further, the lifting apparatus 100 according to the invention has a very compact structure which can be installed in vehicles with very narrow doors, e.g. with doors having even a minimum aperture of 800 mm; in addition, once installed, the apparatus 100 does not impair the entrance area and thus, if not used, it allows the free passage to passengers not needing such aiding apparatus 100.

These results are achieved according to a solution relatively easy to be implemented, which can be realized at competitive costs and can be installed in new vehicles as well as in existing ones.

Further, the lifting apparatus 100 can be operated in an almost automatic or semiautomatic way, exploiting for example systems on board of the vehicle on which it is installed, and it can be operated also manually, when for example for whatever reason power cannot be provided by the vehicle itself.

The lifting apparatus 100 and public transportation vehicle 200 thus conceived are susceptible of modifications and variations, within the scope of the inventive concept as defined by the appended claims; for example, some of the components illustrated, can be differently shaped provided that they remain suitable for the functionalities devised for them within the frame of the present invention; for example the visual indicator 36 can be of any suitable type, the latching mechanism 4 or latching means 25 can be of any suitable type and differently positioned with respect to the exemplary embodiments illustrated; et cetera.

## Claims

1. A lifting apparatus (100) configured to assist a wheelchair user to get on or off a public transportation vehicle (200), comprising at least:
- a fixing support (1) which is adapted to be fixedly connected to an inner part of and on a first side (202) relative to an entrance (204) of the vehicle (200);
- a movable assembly (110) which is movably connected to the fixing support (1) at least between a rest position and a working position, wherein said movable assembly (110) comprises at least:
- a ramp (10) which is adapted to be positioned, when the movably assembly (110) is in said working position, in an inclined position with a first end side (12) adapted to bear on a station platform (300) and a second opposite end side (14) positioned substantially at the level of the access floor (205) at said entrance (204);
- a lifting platform (30) suitable to carry a wheelchair user between the station platform (300) and the level of the access floor (205) at said entrance (204); and
- actuating means (50) which are configured to connect, in a movable manner, the lifting platform (30) to the ramp (10), **characterized in that** said fixing support (1) has a shaped body extending along a substantially vertical axis (X), and wherein, when in said rest position, the movable assembly (110) is arranged to be substantially aligned with the fixing support (1) along said first side (202) relative to the entrance, with said ramp (10) lying in a plane (X1) substantially parallel to said vertical axis (X) and the lifting platform (30) overlapping the ramp (10) while at least part of the actuating means (50) are interposed there between.

2. The lifting apparatus (100) according to claim 1, wherein the movable assembly (110) is arranged to be rotated, relative to said fixing support (1), about said vertical axis (X), from said rest position into an intermediate position where said ramp (10) is brought at the entry threshold of said entrance (204) of the vehicle (200).

3. The lifting apparatus (100) according to claim 2, wherein the movable assembly (110) is arranged to be further rotated, relative to said fixing support (1), about an axis (Y) transversal to said vertical axis (X), from said intermediate position into said working position up to when said first end side (12) of said ramp (10) is brought to bear on the station platform (300).

4. The lifting apparatus (100) according to one or more of the previous claims, wherein said actuating means (50) are configured to adjust the inclination of the lifting platform (30) relative to said ramp (10).

5. The lifting apparatus (100) according to one or more of the previous claims, wherein said actuating means (50) comprise a slide (52) which is mounted sliding on said ramp (10) with the lifting platform (30) having one side (35) which is connected to the slide (52) pivotally around a first pivoting axis (Y1).

6. The lifting apparatus (100) according to claim 5, wherein said ramp (10) comprises two substantially parallel rails (18) which extend from said first end side (12) to said second opposite end side (14), and a central bush bearing (19) which extends from said first end side (12) to said second opposite end side (14), and wherein said actuating means (50) further comprise a first worm screw (51) which is housed movable inside the central bush bearing (19), said first worm screw (51) being arranged, once actuated to move, to cause said slide (52) to slide along said two parallel rails (18).

7. The lifting apparatus (100) according to one or more of the claims 5 and 6, wherein said actuating means (50) further comprise a connecting arm (54) which is configured to connect the lifting platform (30) to said slide (52) in a movable manner between a folded position where the lifting platform (30) overlaps said ramp (10) with said slide (52) and the connecting arm (54) positioned in between, and an extracted position where the lifting platform (30) is deployed relative to said ramp (10) to be brought into a wheelchair (1) carrying position.

8. The lifting apparatus (100) according to claim 7, wherein the connecting arm (54) has a variable extension along an axis (Z) transversal to said vertical axis (X) and said first pivoting axis (Y1).

9. The lifting apparatus (100) according to one or more of claims 7 and 8, wherein the connecting arm (54) comprises:
- a fork shaped part (56) which is connected, at the ends of its tines (57), to the slide (52) pivotally around a second pivot axis (Y2) substantially parallel to said first pivot axis (Y1); and
- a U- or C-shaped part (58) which is arranged with its side arms (59) oriented opposite to said tines (57) and is adapted to be connected to said lifting platform (30), said U- or C-shaped part (58) being movable relative to the fork shaped part (56).

10. The lifting apparatus (100) according to claim 9, wherein the connecting arm (54) comprises a bushing (64) which is connected at a first side to said U- or C-shaped part (58) and has a second opposite side that is inserted sliding inside a first through hole (69) provided on a central portion (70) of the fork-shaped part (56), and two guiding rods (66) which are solidly connected at one end to the U- or C-shaped part (58) and extend, substantially parallel to each other, along two opposite sides with the bushing (64) positioned in between, the two guiding rods (66) having each a free end which is inserted sliding inside a corresponding through holes (68) provided on said central portion (70) of the fork-shaped part (56).

11. The lifting apparatus (100) according to one or more of claims 9 and 10, wherein said actuating means (50) further comprises a reduction gear mechanism (60) connected to the U- or C-shaped part (58), and a second worm screw (62) which is keyed on the reduction gear mechanism (60), said second worm screw (62) being movable inside and operatively coupled to the fork shaped part (56) via said bushing (64).

12. The lifting apparatus (100) according to claim 11, wherein said actuating means (50) further comprises a threaded insert (63) which is coupled to the second worm screw (62) and is adapted to rest on the central portion (70) of the fork-shaped part (56).

13. The lifting apparatus (100) according to one or more of the previous claims, wherein the lifting platform (30) comprises a base (31) and at least one visual indicator (36) for indicating when the base (31) has reached a substantially horizontal position.

14. A public transportation vehicle (200), in particular a railway vehicle, **characterized in that** it comprises a lifting apparatus (100) according to one or more of the previous claims.

## Patentansprüche

1. Hebevorrichtung (100), welche dazu eingerichtet ist, einen Rollstuhlnutzer zu unterstützen, in ein oder aus einem öffentlichen Verkehrsmittelfahrzeug (200) zu steigen, wenigstens umfassend:
- eine Befestigungshalterung (1), welche dazu eingerichtet ist, mit einem inneren Teil von und an einer ersten Seite (202) relativ zu einem Eingang (204) des Fahrzeugs (200) fest verbunden zu sein;
- eine bewegbare Anordnung (110), welche mit der Befestigungshalterung (1) wenigstens zwischen einer Ruheposition und einer Arbeitsposition bewegbar verbunden ist, wobei die bewegbare Anordnung (110) wenigstens umfasst:
- eine Rampe (10), welche dazu eingerichtet ist, wenn sich die bewegbare Anordnung (110) in der Arbeitsposition befindet, in einer geneigten Position mit einer ersten Endseite (12), welche dazu eingerichtet ist, an einem Bahnsteig (300) aufzuliegen, und einer zweiten entgegengesetzten Endseite (14) positioniert zu sein, welche im Wesentlichen auf der Höhe des Zugangsbodens (205) an dem Eingang (204) positioniert ist;
- eine Hebebühne (30), welche dazu eingerichtet ist, einen Rollstuhlnutzer zwischen dem Bahnsteig (300) und der Höhe des Eingangsbodens (205) an dem Eingang (204) zu heben; und
- Antriebsmittel (50), welche dazu eingerichtet sind, die Hebebühne (30) mit der Rampe (10) in einer bewegbaren Weise zu verbinden, **dadurch gekennzeichnet, dass** die Befestigungshalterung (1) einen geformten Körper aufweist, welcher sich entlang einer im Wesentlichen vertikalen Achse (X) erstreckt, und wobei, wenn in der Ruheposition, die bewegbare Anordnung (110) dazu angeordnet ist, im Wesentlichen mit der Befestigungshalterung (1) entlang der ersten Seite (202) relativ zu dem Eingang ausgerichtet zu sein, mit der Rampe (10) in einer Ebene (X1) liegend, welche im Wesentlichen parallel zu der vertikalen Achse (X) ist, und der Hebebühne (30) die Rampe (10) überlappend, während wenigstens ein Teil der Antriebsmittel (50) dazwischen eingefügt sind.

2. Hebevorrichtung (100) nach Anspruch 1, wobei die bewegbare Anordnung (110) dazu angeordnet ist, relativ zu der Befestigungshalterung (1), um die vertikale Achse (X) von der Ruheposition zu einer Zwischenposition rotiert zu werden, an welcher die Rampe (10) an die Eingangsschwelle des Eingangs (204) des Fahrzeugs (200) gebracht wird.

3. Hebevorrichtung (100) nach Anspruch 2, wobei die bewegbare Anordnung (110) dazu angeordnet ist, relativ zu der Befestigungshalterung (1), um eine Achse (Y), welche transversal zu der vertikalen Achse (X) ist, von der Zwischenposition in die Arbeitsposition weiter rotiert zu werden, bis die erste Endseite (12) der Rampe (10) dazu gebracht wird, auf dem Bahnsteig (300) aufzuliegen.

4. Hebevorrichtung (100) nach einem oder mehreren der vorhergehenden Ansprüche, wobei die Antriebsmittel (50) dazu eingerichtet sind, die Neigung der Hebebühne (30) relativ zu der Rampe (10) anzupassen.

5. Hebevorrichtung (100) nach einem oder mehreren der vorhergehenden Ansprüche, wobei die Antriebsmittel (50) eine Gleitfläche (52) umfassen, welche an der Rampe (10) gleitend angebracht ist, wobei die Hebebühne (30) eine Seite (35) aufweist, welche mit der Gleitfläche (52) um eine erste Schwenkachse (Y1) schwenkbar verbunden ist.

6. Hebevorrichtung (100) nach Anspruch 5, wobei die Rampe (10) zwei im Wesentlichen parallele Schienen (18), welche sich von der ersten Endseite (12) zu der zweiten entgegengesetzten Endseite (14) erstrecken, und einen zentralen Lagerkörper (19) umfasst, welcher sich von der ersten Endseite (12) zu der zweiten entgegengesetzten Endseite (14) erstreckt, und wobei die Antriebsmittel (50) ferner eine erste Schneckenschraube (51) umfassen, welche in dem zentralen Lagerkörper (19) bewegbar untergebracht ist, wobei die Schneckenschraube (51) dazu angeordnet ist, sobald zum Bewegen angetrieben, die Gleitfläche (52) zu veranlassen, entlang der zwei parallelen Schienen (18) zu gleiten.

7. Hebevorrichtung (100) nach einem oder mehreren der Ansprüche 5 und 6, wobei die Antriebsmittel (50) ferner einen Verbindungsarm (54) umfassen, welcher dazu eingerichtet ist, die Hebebühne (30) mit der Gleitfläche (52) in einer bewegbaren Weise zwischen einer gefalteten Position, in welcher die Hebebühne (30) die Rampe (10) überlappt, wobei die Gleitfläche (52) und der Verbindungsarm (54) dazwischen positioniert sind, und einer herausgefahrenen Position zu verbinden, in welcher die Hebebühne (30) relativ zu der Rampe (10) dazu eingesetzt ist, in eine Rollstuhl-(1)-Trageposition gebracht zu sein.'

8. Hebevorrichtung (100) nach Anspruch 7, wobei der Verbindungsarm (54) eine variable Erstreckung entlang einer Achse (Z) aufweist, welche transversal zu der vertikalen Achse (X) und der ersten Schwenkachse (Y1) ist.

9. Hebevorrichtung (100) nach einem oder mehreren der Ansprüche 7 und 8, wobei der Verbindungsarm (54) umfasst:
- einen gabelförmigen Teil (56), welcher an den Enden seiner Zinken (57) mit der Gleitfläche (52) um eine zweite Schwenkachse (Y2) schwenkbar verbunden ist, welche im Wesentlichen parallel mit der ersten Schwenkachse (Y1) ist; und
- einen U- oder C-förmigen Teil (58), welcher dazu angeordnet ist, mit seinen Seitenarmen (59) entgegengesetzt zu den Zinken (57) orientiert zu sein, und welcher dazu eingerichtet ist, mit der Hebebühne (30) verbunden zu sein, wobei der U- oder C-förmige Teil (58) relativ zu dem gabelförmigen Teil (56) bewegbar ist.

10. Hebevorrichtung (100) nach Anspruch 9, wobei der Verbindungsarm (54) eine Buchse (64), welche an einer ersten Seite mit dem U- oder C-förmigen Teil (58) verbunden ist und eine zweite entgegengesetzte Seite aufweist, welche gleitend in einem ersten Durchgangsloch (69) eingeführt ist, welches an einem zentralen Abschnitt (70) des gabelförmigen Teils (56) bereitgestellt ist, und zwei Führungsstäbe (66) umfasst, welche mit einem Ende des U- oder C-förmigen Teils (58) fest verbunden sind und sich, im Wesentlichen parallel zueinander, entlang zwei entgegengesetzten Seiten mit der dazwischen positionierten Buchse (64) erstrecken, wobei die zwei Führungsstäbe (66) jeweils ein freies Ende aufweisen, welches gleitend in ein entsprechendes Durchgangsloch (68) eingeführt ist, welches an einem zentralen Abschnitt (70) des gabelförmigen Teils (56) bereitgestellt ist.

11. Hebevorrichtung (100) nach einem oder mehreren der Ansprüche 9 und 10, wobei die Antriebsmittel (50) ferner einen Untersetzungsgetriebemechanismus (60), welcher mit dem U- oder C-förmigen Teil (58) verbunden ist, und eine zweite Schneckenschraube (62) umfasst, welche mit dem Untersetzungsgetriebemechanismus (60) verkeilt ist, wobei die zweite Schneckenschraube (62) in dem gabelförmigen Teil (56) durch die Buchse (64) bewegbar ist und mit diesem betriebsfähig verbunden ist.

12. Hebevorrichtung (100) nach Anspruch 11, wobei die Antriebsmittel (50) ferner einen Einsatz mit Gewinde (63) umfassen, welcher mit der zweiten Schneckenschraube (62) gekoppelt ist und dazu eingerichtet ist, an dem zentralen Abschnitt (70) des gabelförmigen Teils (56) zu ruhen.

13. Hebevorrichtung (100) nach einem oder mehreren der vorhergehenden Ansprüche, wobei die Hebebühne (30) ferner eine Basis (31) und wenigstens eine visuelle Anzeigeeinheit (36) zum Anzeigen, wenn die Basis (31) eine im Wesentlichen horizontale Position erreicht hat.

14. Öffentliches Transportmittelfahrzeug (200), insbesondere ein Schienenfahrzeug, **dadurch gekennzeichnet, dass** es eine Hebevorrichtung (100) nach einem oder mehreren der vorhergehenden Ansprüche umfasst.

## Revendications

1. Appareil de levage (100) configuré pour aider une personne en fauteuil roulant à monter ou descendre d'un véhicule de transport en commun (200), comprenant au moins :
- un support de fixation (1) qui est adapté pour être relié de manière fixe à une partie intérieure de et sur un premier côté (202) par rapport à une entrée (204) du véhicule (200) ;
- un ensemble mobile (110) qui est relié de manière mobile au support de fixation (1) au moins entre une position de repos et une position de fonctionnement, dans lequel ledit ensemble mobile (110) comprend au moins :
- une rampe (10) qui est adaptée pour être positionnée, lorsque l'ensemble mobile (110) est dans ladite position de fonctionnement, dans une position inclinée avec un premier côté d'extrémité (12) adapté pour reposer sur un quai de gare (300) et un deuxième côté d'extrémité opposé (14) positionné sensiblement au niveau du faux plancher (205) au niveau de ladite entrée (204) ;
- une plateforme de levage (30) adaptée pour transporter une personne en fauteuil roulant entre le quai de gare (300) et le niveau du faux plancher (205) au niveau de ladite entrée (204) ; et
- des moyens d'actionnement (50) qui sont configurés pour relier, de manière mobile, la plateforme de levage (30) à la rampe (10), **caractérisé en ce que** ledit support de fixation (1) présente un corps profilé s'étendant le long d'un axe sensiblement vertical (X), et dans lequel, lorsqu'il est dans ladite position de repos, l'ensemble mobile (110) est agencé pour être sensiblement aligné avec le support de fixation (1) le long dudit premier côté (202) par rapport à l'entrée, ladite rampe (10) se trouvant dans un plan (X1) sensiblement parallèle audit axe vertical (X) et la plateforme de levage (30) chevauchant la rampe (10) tandis qu'au moins une partie des moyens d'actionnement (50) sont interposés entre eux.

2. Appareil de levage (100) selon la revendication 1, dans lequel l'ensemble mobile (110) est agencé pour être tourné, par rapport audit support de fixation (1), autour dudit axe vertical (X), de ladite position de repos dans une position intermédiaire où ladite rampe (10) est amenée au seuil d'entrée de ladite entrée (204) du véhicule (200).

3. Appareil de levage (100) selon la revendication 2, dans lequel l'ensemble mobile (110) est agencé pour être en outre tourné, par rapport audit support de fixation (1), autour d'un axe (Y) transversal audit axe vertical (X), de ladite position intermédiaire à ladite position de fonctionnement jusqu'à ce que ledit premier côté d'extrémité (12) de ladite rampe (10) soit amené à reposer sur le quai de gare (300).

4. Appareil de levage (100) selon l'une ou plusieurs des revendications précédentes, dans lequel lesdits moyens d'actionnement (50) sont configurés pour régler l'inclinaison de la plateforme de levage (30) par rapport à ladite rampe (10).

5. Appareil de levage (100) selon l'une ou plusieurs des revendications précédentes, dans lequel lesdits moyens d'actionnement (50) comprennent un coulisseau (52) qui est monté coulissant sur ladite rampe (10) avec la plateforme de levage (30) présentant un côté (35) qui est relié au coulisseau (52) de manière pivotante autour d'un premier axe de pivotement (Y1).

6. Appareil de levage (100) selon la revendication 5, dans lequel ladite rampe (10) comprend deux rails (18) sensiblement parallèles qui s'étendent dudit premier côté d'extrémité (12) audit deuxième côté d'extrémité opposé (14), et un palier à douille central (19) qui s'étend dudit premier côté d'extrémité (12) audit deuxième côté d'extrémité opposé (14), et dans lequel lesdits moyens d'actionnement (50) comprennent en outre une première vis sans fin (51) qui est logée mobile à l'intérieur du palier à douille central (19), ladite première vis sans fin (51) étant agencée, une fois actionnée pour se déplacer, pour amener ledit coulisseau (52) à coulisser le long desdits deux rails parallèles (18).

7. Appareil de levage (100) selon l'une ou plusieurs des revendications 5 et 6, dans lequel lesdits moyens d'actionnement (50) comprennent en outre un bras de liaison (54) qui est configuré pour relier la plateforme de levage (30) audit coulisseau (52) de manière mobile entre une position repliée où la plateforme de levage (30) chevauche ladite rampe (10) avec ledit coulisseau (52) et le bras de liaison (54) positionnés entre elles, et une position extraite où la plateforme de levage (30) est déployée par rapport à ladite rampe (10) pour être amenée dans une position de transport d'un fauteuil roulant (1).

8. Appareil de levage (100) selon la revendication 7, dans lequel le bras de liaison (54) présente une extension variable le long d'un axe (Z) transversal audit axe vertical (X) et audit premier axe de pivotement (Y1).

9. Appareil de levage (100) selon l'une ou plusieurs des revendications 7 et 8, dans lequel le bras de liaison (54) comprend :
- une partie en forme de fourche (56) qui est reliée, aux extrémités de ses dents (57), au coulisseau (52) de manière pivotante autour d'un deuxième axe de pivotement (Y2) sensiblement parallèle audit premier axe de pivotement (Y1) ; et
- une partie en forme de U ou de C (58) qui est agencée avec ses bras latéraux (59) orientés à l'opposé desdites dents (57) et est adaptée pour être reliée à ladite plateforme de levage (30), ladite partie en forme de U ou de C (58) étant mobile par rapport à la partie en forme de fourche (56).

10. Appareil de levage (100) selon la revendication 9, dans lequel le bras de liaison (54) comprend une douille (64) qui est reliée d'un premier côté à ladite partie en forme de U ou de C (58) et présente un deuxième côté opposé qui est inséré coulissant à l'intérieur d'un premier trou traversant (69) ménagé sur une partie centrale (70) de la partie en forme de fourche (56), et deux tiges de guidage (66) qui sont solidement reliées à une extrémité à la partie en forme de U ou de C (58) et s'étendent, sensiblement parallèlement l'une à l'autre, le long de deux côtés opposés avec la douille (64) positionnée entre elles, les deux tiges de guidage (66) présentant chacune une extrémité libre qui est insérée par coulissement à l'intérieur d'un trou traversant (68) correspondant ménagé sur ladite partie centrale (70) de la partie en forme de fourche (56).

11. Appareil de levage (100) selon l'une ou plusieurs des revendications 9 et 10, dans lequel lesdits moyens d'actionnement (50) comprennent en outre un mécanisme d'engrenage réducteur (60) relié à la partie en forme de U ou de C (58), et une deuxième vis sans fin (62) qui est clavetée sur le mécanisme d'engrenage réducteur (60), ladite deuxième vis sans fin (62) étant mobile à l'intérieur et accouplée de manière fonctionnelle à la partie en forme de fourche (56) par le biais de ladite douille (64).

12. Appareil de levage (100) selon la revendication 11, dans lequel lesdits moyens d'actionnement (50) comprennent en outre une douille taraudée (63) qui est accouplée à la deuxième vis sans fin (62) et est adaptée pour reposer sur la partie centrale (70) de la partie en forme de fourche (56).

13. Appareil de levage (100) selon l'une ou plusieurs des revendications précédentes, dans lequel la plateforme de levage (30) comprend une base (31) et au moins un indicateur visuel (36) pour indiquer quand la base (31) a atteint une position sensiblement horizontale.

14. Véhicule de transport en commun (200), en particulier un véhicule ferroviaire, **caractérisé en ce qu'**il comprend un appareil de levage (100) selon l'une ou plusieurs des revendications précédentes.
